# EUROPÄISCHE PATENTSCHRIFT

(11) **EP 1 362 872 B1**
(45) Veröffentlichungstag und Bekanntmachung des Hinweises auf die Patenterteilung: **14.06.2006**
(21) Anmeldenummer: 03008057.6
(22) Anmeldetag: 14.04.2003
(51) Int. Cl.: C08G 18/42

(54) **Polyesterurethane**
Polyesterurethane
Polyesterurethane

(30) Priorität: 18.04.2002 DE 10217350
(43) Veröffentlichungstag der Anmeldung: 19.11.2003
(73) Patentinhaber: Mnemoscience GmbH, 52074 Aachen (DE)
(72) Erfinder: Lendlein, Andreas, 14167 Berlin (DE); Schmidt, Annette, 41462 Neuss (DE); Kratz, Karl, 41236 Mönchengladbach (DE); Schulte, Jürgen, 52062 Aachen (DE)
(74) Vertreter: Grünecker, Kinkeldey, Stockmair & Schwanhäusser Anwaltssozietät

(56) Entgegenhaltungen:
- WO-A-99/42147
- BYUNG K K ET AL: "Polyurethanes having shape memory effects" POLYMER, ELSEVIER SCIENCE PUBLISHERS B.V, GB, Bd. 37, Nr. 26, 1996, Seiten 5781-5793, XP004070893 ISSN: 0032-3861

## Beschreibung

Die vorliegende Erfindung betrifft Polyesterurethane mit einem spezifischen Bestandteil aus Polypentadecalacton (PDL).

Kunststoffe sind wertvolle synthetische polymere Materialien, die in vielen Bereichen der Technik einen festen und prominenten Platz erobert haben. Durch die Variation der einzelnen Bestandteile von Kunststoffen wird in vielen Bereichen versucht, optimale Werkstoffeigenschaften zu erzielen, um so gezielt auf spezielle Anwendungserfordemisse zu reagieren. Eine besonders interessante Produktklasse sind dabei die Polyurethane, da diese durch Additionsreaktionen aus vorgefertigten Segmenten geformt werden können, ohne dass dabei störende Nebenprodukte auftreten. Eine bekannte Klasse an Polyurethanen sind Polyesterurethane aus zwei verschiedenen Polyesterkomponenten, nämlich einem Polycaprolactonsegment und einem Polyparadioxanonsegment. Solche Materialien, die in den internationalen Patentanmeldungen WO-A-99-42528 und WO-A-99-42147 beschrieben sind, zeichnen sich durch einen Form-Gedächnis-Effekt aus, wobei das Polycaprolactonsegment als Schaltsegment dient und das Polyparadioxanonsegment als sogenanntes Hartsegment verwendet wird. Der Einsatz von Polyparadioxanonsegmenten ist allerdings in manchen Anwendungsbereichen problematisch, da dieses Segment den Polyesterurethanen eine relativ schnelle Bioabbaubarkeit verleiht. Darüber hinaus zeigen viele der bekannten Polyesterurethane nicht ausreichende mechanische Eigenschaften, so dass hier der Einsatz neuer Segmente erforderlich ist, um den ständig wachsenden Anforderungen an polymere Werkstoffe gerecht zu werden. Schließlich sollen moderne polymere Werkstoffe möglichst die gezielte Einstellung erwünschter Eigenschaften über ein breites Fenster ermöglichen, wobei vorteilhafterweise möglichst wenig stoffliche Veränderungen notwendig sind.

Es ist also das Ziel der vorliegenden Erfindung einen neuen polymeren Werkstoff anzugeben, der die oben geschilderten Probleme des Stands der Technik überwindet.

Diese Aufgabe wird erfindungsgemäß mit einem Polyesterurethan gelöst, das als wesentliche Komponente ein Polypentadecalactonsegment umfasst.

Bevorzugte Ausführungsformen sind in den Unteransprüchen angegeben.

In der allgemeinsten Form kann die vorliegende Erfindung darin gesehen werden, dass Polypentadecalactonsegmente in Polyesterurethanen eingesetzt werden. Dabei können die Polypentadecalactonsegmente die einzigen Polyestersegmente im Polyesterurethan sein oder es können noch weitere, von Polypentadecalacton verschiedene Segmente vorliegen. Bei bevorzugten Ausführungsformen der vorliegenden Erfindung werden die Polypentadecalactonsegmente als Hartsegment in Polyesterurethanen eingesetzt, die neben den Polypentadecalactonsegmenten noch andere Polyestersegmente, bevorzugt Polycaprolactonsegmente, als Weichsegmente enthalten. Diese zusätzlichen Segmente können unter einer Vielzahl an chemisch verschiedenen Komponenten gewählt werden, die sich als Weichsegment eignen. Speziell zu nennen sind in diesem Zusammenhang teilkristalline Segmente, umfassen Poyestersegmente, Polyetherestersegmente und Polyethersegmente wie Polycaprolactonsegmente (PCL), Polycaprolacton-copolytetrahydrofuransegmente (PCL-co-pTHF), Tetrahydrofuransegmente (pTHF), Polypropylenglycolsegmente (PPG) und Polyethylenglycolsegmente (PEG), sowie glasartige Segmente, umfassen Polyester und Copolyester, wie Poly-L-lactid-co-glycolid (ran) (PLGA) und Poly-DL-Lactid (P-DL-LA). Insbesondere eine Kombination aus Polypentadecalactonsegmenten und Polyethylenglycolsegmenten ermöglicht interessante Materialeigenschaften aufgrund der Kombination eines hydrophoben und eines hydrophilen Segments.

Das Polypentadecalactonsegment, enthalten im erfindungsgemäßen Polyesterurethan wird üblicherweise in Form eines Makrodiols in das Polyesterurethan eingeführt. Dieses Segment kann durch ringöffnende Polymerisation aus ω-Pentadecalacton unter Zinnkatalyse und Einsatz von Ethylenglycol als Initiator erhalten werden. Das Molgewicht der Polypentadecalactonsegmente im erfindungsgemäßen Polyesterurethan ist nicht kritisch. Üblicherweise beträgt das Zahlenmittel des Molgewichts jedoch 1000 bis 20000 g/mol, bevorzugt 2000 bis 11000 g/mol, bestimmt durch GPC-Analyse.

Das Makrodiol aus Pentadecalacton kann mit den bei der Herstellung von Polyurethanen üblichen Diisocyanaten zu Polyesterurethanen umgesetzt werden. Bevorzugte Diisocyanaten sind dabei Verbindungen der Formel O=C=N-R-N=C=O, wobei R aromatisch oder aliphatisch sein kann. Bevorzugt ist R jedoch aliphatisch, mit einer Kohlenstoffkette mit 1 bis 10, bevorzugt 2 bis 8, insbesondere bevorzugt 4 bis 7 Kohlenstoffatomen. Diese Kohlenstoffkette kann mit Wasserstoff abgesättigt sein oder weitere Substituenten aufweisen. Diese Substituenten umfassen kurzkettige Alkylgruppen, insbesondere Methylgruppen. Ein insbesondere bevorzugtes Diisocyanat ist ein Trimethylhexan-1,6-diisocyanat.

Durch die Variation des Molgewichts des Polypentadecalactonsegments lassen sich die Eigenschaften des Polyesterurethans variieren. Das Molgewicht des Polyesterurethans ist nicht kritisch und kann in Abhängigkeit vom erwünschten Verwendungszweck gewählt werden. Typische Molgewichte (Zahlenmittel, bestimmt durch GPC) sind im Bereich von 50000 und 250000 g/mol, bevorzugt im Bereich von 60000 bis 200000 g/mol, insbesondere bevorzugt im Bereich von 62000 bis 196000g/mol.

Die erfindungsgemäßen Polyesterurethane mit Polypentadecalactonsegmenten zeichnen sich durch eine Schmelztemperatur, abhängig vom Molgewicht, im Bereich von ca. 90°C ( bevorzugt 87 - 95°C) aus. Typische mechanische Eigenschaften sind ein E-Modul von ungefähr 17 MPa, eine Bruchdehnung bei 70°C von 1000% und eine Zugfestigkeit von ungefähr 18 MPa. Polyesterurethane mit Polycaprolactonsegmenten, die aus dem Stand der Technik bekannt sind, zeigen dagegen Werte für E-Modul und Zugfestigkeit von lediglich 0,5 bzw. 2 MPa. Die erfindungsgemäßen Materialien, obwohl sie sich in ihrer chemischen Zusammensetzung nur wenig von den Polycaprolactonurethanen unterscheiden, sind daher wertvolle und gut einsetzbare Materialien für eine Vielzahl von Anwendungen. Die langsamere Bioabbaubarkeit der Polypentadecalactonsegmente, verglichen mit den Polycaprolactonsegmenten ermöglicht den Einsatz in Anwendungen, bei denen eine verlängerte Stabilität in physiologischer Umgebung erforderlich sind, beispielsweise bei Implantaten für Langzeitanwendungen. Die Verwendung von Segmenten aus Pentadecalacton hat darüber hinaus den Vorteil, dass das Monomer, aufgrund der Verwendung in der Kosmetikindustrie, in großen Mengen relativ preiswert erhältlich ist.

Bevorzugt enthält das Polyesterurethan neben dem Polypentadecalactonsegment noch mindestens ein weiteres Polyestersegment, wie die oben genannten. Insbesondere bevorzugt ist dieses weitere Segment ein Polycaprolactonsegment. Diese Polyesterurethane sind Blockcopolymere mit Polypentadecalactonsegmenten, verknüpft mit anderen Polyestersegmenten, bevorzugt Polycaprolactonsegmenten. Die weiteren Segmente, insbesondere das Polycaprolactonsegment, können, wie oben für das Polypentadecalactonsegment beschrieben, in Form eines Makrodiols in das erfindungsgemäße Polyesterurethan eingeführt werden. Dieses Makrodiol kann durch üblichen, dem Fachmann bekannte Verfahren hergestellt werden, wie eine ringöffnende Polymerisation von ε-Caprolacton, analog dem oben beschriebenen Verfahren. Das Molgewicht der weiteren Segmente, wie des Polycaprolactonsegments ist nicht kritisch, üblicherweise weisen diese Segmente jedoch ein Zahlenmittel des Molgewichts, bestimmt durch GPC, von 1000 bis 20000 g/mol auf, bevorzugt von 2000 bis 11000 g/mol, wobei der bevorzugte Bereich für PEG-Segmente von 2000 bis 20000 g/mol, für PLGA von 4000 bis 9000 g/mol und für P-DL-LA von 5000 bis 11000 g/mol ist. Die Polyesterurethane mit den weiteren Segmenten, bevorzugt Polycaprolactonsegmenten, weisen bevorzugt ein Molgewicht von 50000 bis 250000 g/mol (Zahlenmittel, bestimmt durch GPC) auf, stärker bevorzugt von 60000 bis 200000 g/mol, insbesondere bevorzugt 62000 bis 196000 g/mol (und in einigen Ausführungsformen auch von 55000 bis 100000 g/mol). Der Anteil an Pentadecalactoneinheiten kann über einen breiten Bereich variieren, bevorzugt liegt der Anteil an Pentadecalactoneinheiten im Bereich von 10 bis 80 Gew.-%, insbesondere bevorzugt im Bereich von 20 bis 60 Gew.-%.

Werden die beiden oben beschriebenen Polyestersegmente durch Polyaddition mit den oben beschriebenen Diisocyanaten zu erfindungsgemäßen Polyesterurethanen umgesetzt, so lässt sich durch Variation der jeweiligen Anteile und Molmassen der Polyestersegmente das Eigenschaftsprofil der resultierenden Polyesterurethane über einen breiten Bereich einstellen. In dieser bevorzugten Ausführungsform der vorliegenden Erfindung wird also ein polymeres System zur Verfügung gestellt, das durch Variation einfacher Ausgangsmaterialien eine gezielte Eigenschaftenmodifizierung ermöglicht.

Die erfindungsgemäßen Materialien können in Form von Fasern eingesetzt werden, wie in knitterfreien Textilstoffen, in der Form von verschieden geformten Artikeln, beispielsweise in der Medizintechnik, als langsam abbaubare Implantate, oder in der Form von Beschichtungen, beispielsweise auf medizinischen Kurzzeitimplantaten, wie Kanülen, und Führungsdrähten. Der Einsatz als Beschichtungsmaterial kann die Bioverträglichkeit der beschichteten Gegenstände erhöhen und so vor unerwünschten Nebenreaktionen beim Einsatz der beschichteten Gegenstände schützen.

Die bevorzugten Polyesterurethane der vorliegenden Erfindung, die neben den Polypentadecalactonsegmenten noch andere Segmente, bevorzugt Polycaprolatonsegmente aufweisen, zeichnen sich durch weitere bevorzugte Eigenschaftsprofile aus.

Durch Einführung der weiteren Segmente, bevorzugt die oben genannten, insbesondere bevorzugt Polycaprolactonsegmente, in die erfindungsgemäßen Polyesterurethane kann eine zweite Schmelztemperatur, die in DSC Untersuchungen detektiert werden kann, in das Polyesterurethan eingeführt werden. Diese zweite Schmelztemperatur liegt üblicherweise im Bereich von oberhalb 50°C, in Abhängigkeit vom Molgewicht und dem Anteil an weiteren Segmenten, bevorzugt Polycaprolactonsegmenten, im Polyesterurethan.

Weiterhin können die mechanischen Eigenschaften gezielt über einen weiten Bereich variiert werden. Mit steigendem Anteil an Polypentadeclacton kann der Wert für das E-Modul gesteigert werden. Der Wert für die Bruchdehnung kann in einem Bereich von 600 bis 1200% mit steigendem Polypentadecalactongehalt eingestellt werden und auch die Zugfestigkeit lässt sich mit steigendem Gehalt an Polypentadecalactonsegment über einen Bereich von 4 bis 10 MPa einstellen (alle Werte bestimmt bei 70°C). Durch die geringere, d.h. langsamere Bioabbaubarkeit der Polypentadecalactonsegmente, verglichen mit den im Stand der Technik bislang eingesetzten Polyparadioxanonsegmenten, können auch die bevorzugten Polyesterurethane der vorliegenden Erfindung in Anwendungen zum Einsatz kommen, in denen die bekannten Polyesterurethane aufgrund der schnellen Abbaubarkeit und der damit verbundenen ungenügenden mechanischen Stabilität nicht einsetzbar waren. Im Vergleich mit den bekannten Polyesterurethanen mit Polycaprolactonsegmenten und Polyparadioxanonsegmenten zeichnen sich die erfindungsgemäßen Polyesterurethane darüber hinaus durch eine vergrößerte Produktionsstabilität und Granulierfähigkeit aus, was die Herstellung und Handhabung der erfindungsgemäßen Polyesterurethane vereinfacht. Die bekannten Polyesterurethane mit Poly-p-Dioxanon Segmenten zeigen insbesondere nach dem Extrudieren Abbaureaktionen, während die erfindungsgemäßen Polyesterurethane auch hier eine erhöhte Stabilität aufweisen. Die erfindungsgemäßen Materialien weisen eine gute Bioverträglichkeit auf, wie durch entsprechende Untersuchungen festgestellt werden konnte.

Insbesondere bevorzugte Polyesterurethane der vorliegenden Erfindung, die sowohl Polypentadecalactonsegmente als auch weitere Segmente, bevorzugt Polycaprolactonsegemente aufweisen zeigen darüber hinaus Form-Gedächnis-Eigenschaften, so dass diese bevorzugten Materialien als Shape-Memory-Polymere (SMP) bezeichnet werden können.

Solche Materialien werden insbesondere erhalten, wenn im erfindungsgemäßen Polyesterurethan das Polypentadecalactonsegment und das weitere Segment, bevorzugt ein Polycaprolactonsegment in bestimmten Mengenverhältnissen vorliegen. Diese Mengenverhältnisse lassen sich in Abhängigkeit von der Molmasse der jeweiligen Segmente und dem Anteil (Gew.-%) an weiteren Segmenten, bevorzugt mit Caprolactoneinheiten, und Pentadecalactoneinheiten einstellen. Als Faustregel gilt, dass bei gleichem Zahlenmittel der Polyestersegmente bevorzugt SMP-Materialien erhalten werden können, wenn der Anteil an weiteren Segmenten, bevorzugt mit Caprolactoneinheiten im Polyesterurethan höher ist als der Anteil an Pentadecalactoneinheiten. Ist das Molgewicht der weiteren Segmente, bevorzugt der Polycaprolactonsegmente im erfindungsgemäßen Polyesterurethan jedoch größer als das der Polypentadecalactoneinheiten, so kann der Anteil an Pentadecalactoneinheiten größer sein als der Anteil an weiteren Segmenten, bevorzugt mit Caprolactoneinheiten.

Gute SMP-Materialien lassen sich insbesondere mit den folgenden Zusammensetzungen erhalten:
Polypentadecalactonsegment: Molgewicht 1000 bis 10000 g/mol (Zahlenmittel), bevorzugt 1500 bis 5000, insbesondere bevorzugt 2000 bis 3000 g/mol
Polycaprolactonsegment: Molgewicht 3000 bis 11000 g/mol (Zahlenmittel), bevorzugt 4000 bis 10000 g/mol
Polycaprolacton-co-polytetrahydrofuransegment: Molgewicht 1000 bis 5000 g/mol (Zahlenmittel), bevorzugt 1500 bis 3500 g/mol
Polytetrahydrofuransegment: Molgewicht 1000 bis 5000 g/mol (Zahlenmittel), bevorzugt 1500 bis 3000 g/mol
Polypropylenglycolsegment: Molgewicht 1000 bis 8000 g/mol (Zahlenmittel), bevorzugt 1200 bis 4500 g/mol
Polyethylenglycolsegment: Molgewicht 1000 bis 25000 g/mol (Zahlenmittel), bevorzugt 1500 bis 20000 g/mol
Poly-L-lactid-co-glycolidsegmnet (ran): Molgewicht 4000 bis 10000 g/mol (Zahlenmittel), bevorzugt 5000 bis 8000 g/mol
Poly-DL-lactidsegment: Molgewicht 4000 bis 15000 g/mol (Zahlenmittel), bevorzugt 5000 bis 11000 g/mol
Polyesterurethan: Molgewicht 50000 bis 200000 g/mol (Zahlenmittel), bevorzugt 60000 bis 190000 g/mol; Anteil weiteres Segment 20 bis 80 Gew.-%, bevorzugt 45 bis 70 Gew.-%, weiter bevorzugt 50 bis 60 Gew.-%, Anteil Polypentadecalactonsegment 80 bis 20 Gew.-%, bevorzugt 55 bis 30 Gew.-%, weiter bevorzugt 40 bis 50 Gew.-%

Die erfindungegemäßen Polymere können mit weiteren Bestandteilen gemischt werden, was ihren Anwendungsbereich erweitert. So könne Füllstoffe, wie Silica, Bariumsulfat und ähnliche Materialien, medizinisch wirksame Bestandteile, wie antibakterielle Stoffe, Fungizide, und ähnliche Materialien auf organischer oder anorganischer Basis, wie Nano-Silber, und Farbstoffe mit den erfindungsgemäßen Polymeren gemischt werden. Dabei werden die wertvollen Eigenschaften der Polymere üblicherweise nicht beeinträchtigt, wenn die Zugabemenge im Bereich von bis zu 25% (bezogen auf das Gewicht der Gesamtmischung) liegt, bevorzugt im Bereich von 1 bis 10%.

Es ist auch möglich die erfindungsgemäßen Polymere mit anderen kommerziell erhältlichen Polymeren zu mischen, wie Polyolefine, insbesondere Polyethylen und Polypropylen, oder Vinylpolymere, wie Polystyrol oder PVC. Hier hat es sich gezeigt, dass bei einem Anteil von 50 bis 90 Gew.-% an erfindungsgemäßem Polymer die Form-Gedächtnis-Eigenschaften beibehalten werden. Die ermöglicht insbesondere die Herstellung relativ günstiger SMP-Materialien, da die einzumischenden kommerziell erhältlichen Polymere im Vergleich mit den erfindungsgemäßen Polymeren sehr billig sind und bis zu 50 Gew.-% der Mischung ausmachen können.

Die Einmischung der oben genannten weiteren Bestandteile kann in einer dem Fachmann geläufigen Art und Weise erfolgen, beispielsweise durch Compoundierung mit geeigneten Knetem oder Extrudern.

Die erfindungsgemäßen Polyesterurethane, die ausschließlich Pentadecalactoneinheiten in den Polyestersegmenten aufweisen zeichnen sich darüber hinaus durch die überraschende Eigenschaft aus, dass diese Polyesterurethane in Mischung mit anderen Polyestern, bevorzugt PCL und ein auf PCL basierendes Polyesterurethan, eine Mischung (Blend) ergeben, die Form-Gedächtnis-Eigenschaften zeigt, obwohl die einzelnen Mischungskomponenten selbst keine solchen Eigenschaften zeigen. Das Mischungsverhältnis ist hierbei bevorzugt so, dass das Polyesterurethan aus Pentadecalactonsegmenten 20 bis 80 Gew.-% der Mischung ausmacht, bevorzugt 40 bis 60 Gew.-%. Ohne an eine Theorie gebunden zu sein wird vermutlich durch eine Verträglichkeitsvermittlung durch die Urethansegmente eine Mischung erzeugt, die in ihren makroskopischen Eigenschaften klassischen, kovalent verknüpften Form-Gedächtnis-Materialien entspricht.

Derartige Mischungen lassen sich durch Coausfällung aus Lösung oder durch Compoundierung herstellen, wobei die Coausfällung zwar eine bessere Durchmischung ergibt, aufgrund des Einsatzes von Lösungsmittel aber sowohl im Hinblick auf Kosten als auch im Hinblick auf Arbeitssicherheit nachteilig ist.

Die erfindungsgemäßen Materialien lassen sich darüber hinaus zu interessanten Produkten verarbeiten, wie Schäume (poröse Strukturen) oder Mikroträger (micro beads), die in einer Vielzahl an Anwendungsbereichen eingesetzt werden können. Aufgrund der oben beschriebenen Materialeigenschaften werden so wertvolle Produkte insbesondere für den Bereich Medizintechnik erhalten.

Die Schaumherstellung kann in üblicher Art und Weise erfolgen, z.B. durch Compoundierung mit einem Treibmittel und Extrusion oder durch thermisch induzierte Phasenseparation einer Polymerlösung. Die Art des Treibmittels ist nicht kritisch und es hat sich gezeigt, dass übliche Treibmittel beispielsweise unter Einsatz der Masterbatch-Technologie eingesetz werden können.

Die dabei erhältlichen Schäume entwickeln aufgrund ihrer Form-Gedächtnis-Eigenschaften, die bei der Schaumerzeugung nicht verloren gehen, bei der Expansion zurück zur permanenten Form gezielt steuerbare Kräfte, was interessante Einsatzmöglichkeiten eröffnet.

Bei der Schaumerzeugung können die Porengröße und die Porengrößenverteilung in dem Fachmann bekannter Weise gesteuert werden, wie Schneckengeometrie, Verarbeitungstemperatur und Drehmoment bei der Extrusion.

Die erfindungsgemäßen Mikroträger, die beispielsweise im Bereich Tissue Engineering eingesetzt werden können, können durch übliche Verfahren aus den erfindungsgemäßen Materialien hergestellt werden, beispielsweise durch Lösungsmittelevaporation einer Emulsion oder durch thermisch induzierte Phasenseparation bei eine Lösung, jeweils enthaltend mindestens ein erfindungsgemäßes Polyesterurethan. Die Größe der Mikroträger (mittl. Durchmesser) kann dabei im Bereich von 100nm bis 800 µm, bevorzugt 100 bis 200 µm eingestellt werden, je nach beabsichtigtem Einsatzgebiet. Diese Träger weisen überwiegend eine sphärische Form auf und besitzen häufig einen inneren Hohlraum. Die Oberfläche ist überwiegend glatt, mit einer leichten Strukturierung im Nanometerbereich.

Die vorliegende Erfindung wird weiter durch die folgenden Beispiele illustriert.

### Herstellung von Polyestermakrodiolen

Caprolacton bzw. Pentadecalacton werden unter Einsatz von Ethylenglycol als Initiator und Dibutylzinnoxid als Katalysator, ohne Zusatz eines Lösungsmittels bei 130°C unter Ringöffnung polymerisiert. Die typische Reaktionszeit beträgt 5 Stunden. Durch Auswahl einer geeigneten Menge an Initiator kann das Molgewicht eingestellt werden.

In dieser Weise wurden verschiedene Makrodiole hergestellt, mit Molmassen (Zahlenmittel) von 10000, 2000 und 3000 g/mol für Makrodiole aus Pentadecalacton sowie 10000 und 4000 g/mol für Makrodiole aus Caprolacton.

Weitere Polyesterurethane, in denen die Segmente aus PCL Molgewichte von 2000, 3000, 4000 bzw. 10000 g/mol aufwiesen und die Segmente aus PDL Molgewichte von 2000 bzw. 3000 g/mol aufwiesen wurden untersucht und es wurde gefunden, dass diese Materialien einen Schmelzpunkt der PCL-Segmente im Bereich von 30 bis 55°C aufwiesen, was für viele Anwendungen, insbesondere auch im medizinischen Bereich von Vorteil ist.

### Herstellung von Polyesterurethanen

Diese Makrodiole wurden unter Einsatz eines Gemisches aus 2,2,4- und 2,4,4-Trimethylhehan-1,6-diisocyanat zu Polyesterurethanen umgesetzt. Diese Reaktion erfolgte bei 80°C unter Einsatz von Dioctylzinn als Katalysator und 1,2-Dichlorethan als Lösungsmittel. Die durchschnittliche Reaktionszeit betrug 2 Tage.

In dieser Art wurden verschiedene Polyesterurethane hergestellt, die in der folgenden Tabelle zusammengefasst sind. PDL gibt den Anteil an Pentadecalacton im Polyesterurethan an (ohne Berücksichtigung der Diisocyanatverbrückungen) sowie das Molgewicht der Polypentadecalactonsegmente. PCL gibt die entsprechenden Angaben für Caprolactoneinheiten an. Die Materialien der Versuche 6, 7 und 8 zeichnen sich durch ausgeprägte Form-Gedächnis-Eigenschaften aus. Zu erwähnen ist in diesem Zusammenhang noch, dass die Bruchdehnung der vorgestellten Materialien mit steigendem Gehalt an PDL von 700 auf 1200 % ansteigt, was deutlich den Einfluss der Zusammensetzung auf die mechanischen Eigenschaften demonstriert. Insgesamt verdeutlichen diese exemplarischen und illustrativen Versuche, dass die vorliegende Erfindung ein polymeres System angibt, das eine gezielte Einstellung erwünschter Eigenschaften erlaubt.

| Versuch | PDL | PCL | Molgewicht des Polyesteruret hans | E-Modul (70°C / MPa) | Zugfestigkeit (MPa) |
|---|---|---|---|---|---|
| 1 | 100 Gew.-% / 10000 g/mol | | Mn = 192000 | 17 | 18 |
| 2 | 22 Gew.% / 10000 g/mol | 78 Gew.-% / 10000 g/mol | Mn = 120000 | 1,4 | 5 |
| 3 | 41 Gew.-% / 10000 g/mol | 59 Gew.-% / 10000 g/mol | Mn =196000 | 3 | 10 |
| 4 | 60 Gew.-% / 10000 g/mol | 40 Gew.-% / 10000 g/mol | Mn =176000 | 7 | 8 |
| 5 | 80 Gew.% / 10000 g/mol | 20 Gew.-% / 10000 g/mol | Mn =185000 | 8,5 | 7 |
| 6 | 40 Gew.% / 2000 g/mol | 60 Gew.% / 4000 g/mol | Mn = 86000 | 3,5 | 4,5 |
| | | | | 35 (RT) | 23 (RT) |
| 7 | 50 Gew.-% / 3000 g/mol | 50 Gew.-% / 10000 g/mol | Mn = 75000 | 1,5 | 1,6 |
| | | | | 70 (RT) | 24 (RT) |
| 8 | 40 Gew.-% / 3000 g/mol | 60 Gew.-% / 10000 g/mol | Mn = 62000 | 3 | 9 |
| | | | | 45 (RT) | 30 (RT) |

Weiterhin wurden Versuche zur Temperaturabhängigkeit der mechanischen Eigenschaften des Materials des Beispiels 8 durchgeführt. Die Versuchsergebnisse, die in der folgenden Tabelle zusammengefasst sind demonstrieren, dass die Reissdehnung bei einer Temperaturerhöhung sogar bis in die Nähe der Schmelztemperatur der Polypentadecalactonsegmente gleich bleibt, während E-Modul und Zugfestigkeit abnehmen. Vergleichbare Polyesterurethane, die statt Polypentadecalactonsegmenten Poly(para-Dioxanon)-Segmente aufweisen, zeigen eine deutlich geringere Reissfestigkeit.

| T (°C) | Reissdehnung (%) | E-Modul (Mpa) | Zugfestigkeit (MPa) |
|---|---|---|---|
| 22 | 900 | 45 | 30 |
| 37 | 1000 | 25 | 30 |
| 50 | 1000 | 12 | 20 |
| 55 | 1050 | 7 | 15 |
| 60 | 1050 | 3 | 10 |
| 65 | 1000 | 3 | 10 |
| 70 | 1000 | 3 | 9 |
| 75 | 1000 | 3 | 7 |
| 80 | 1000 | 1,5 | 3 |

Weiter wurde das Material Untersuchungen bezüglich der Form-Gedächtnis-Eigenschaften unterworfen. Es wurden thermozyklische Versuche durchgeführt (zur Erläuterung solcher Versuche siehe z.B. die in der Einleitung genannten internationalen Patentanmeldungen), und die Werte für Formfixierung (Rf) und Formwiederherstellung nach dem Durchlaufen von mehreren Zyklen (Rr) bestimmt. Die erhaltenen Werte sind in der folgenden Tabelle angegeben.

| Zahl der Zyklen | Rf (%) | Rr (%) |
|---|---|---|
| 1 | 98 | - |
| 2 | 98 | 85 |
| 3 | 98 | 98 |
| 4 | 98 | 99 |
| 5 | 98 | 99 |

Die oben gezeigten Versuche wurden so durchgeführt, dass der Form-Gedächtnis-Effekt bei 80°C ausgelöst wurde. Ähnliche Ergebnisse konnten auch erhalten werden, wenn der Effekt bei Temperaturen im Bereich von 60 bis 90°C ausgelöst wurde.

Weiterhin wurden die folgenden Copolyesterurethane hergestellt, wobei bei einigen die mechanischen Eigenschaften untersucht wurden:

### PDL-Polurethane mit teilkristallinen Softsegmenten

Materialkompositionen Polyesterurethane mit PDL
PDL= Polypentadecadolacton, Polyester
+ PCL = Polycaprolacton, Polyester
+ PCL-co-pTHF = Polycaprolacton-co-polytetrahydrofuran , Poletherester
+ pTHF= Polytetrahydrofuran, Polyether
+ PPG= Polypropylenglykol, Polyether
+ PEG= Polyethylenglykol, Polyether
( neue Kombination hydrophob (PPDL) hydrophil (PEG)

### Kombinationen mit PDL 3000 g/mol

| Material | % | | % | Mn |
|---|---|---|---|---|
| PDL 3000 g/mol | 100 | | | 69.000 |
| PDL 3000 g/mol | 50 | PCL 1000 g/mol | 50 | 72.000 |
| PDL 3000 g/mol | 50 | PCL 1250 g/mol | 50 | 105.000 |
| PDL 3000 g/mol | 50 | PCL 2000 g/mol | 50 | 83.000 |
| PDL 3000 g/mol | 40 | PCL 2000 g/mol | 60 | 76.000 |
| PDL 3000 g/mol | 50 | PCL 3000 g/mol | 50 | 75.000 |
| PDL 3000 g/mol | 40 | PCL 3000 g/mol | 60 | 89.000 |
| PDL 3000 g/mol | 50 | PCL 4000 g/mol | 50 | 85.000 |
| PDL 3000 g/mol | 40 | PCL 4000 g/mol | 60 | 95.000 |
| PDL 3000 g/mol | 50 | PCL 10000 g/mol | 50 | 87.000 |
| PDL 3000 g/mol | 40 | PCL 10000 g/mol | 60 | 103.000 |
| PDL 3000 g/mol | 30 | PCL 10000 g/mol | 70 | 89.000 |
| PDL 3000 g/mol | 60 | PCL 10000 g/mol | 40 | 73.000 |
| PDL 3000 g/mol | 40 | PCL-co-pTHF 2000g/mol | 60 | 79.000 |
| PDL 3000 g/mol | 40 | PTHF 2500 g/mol | 60 | 45.000 |
| PDL 3000 g/mol | 40 | PPG 1200 g/mol | 60 | 65.000 |
| PDL 3000 g/mol | 40 | PPG 4000 g/mol | 60 | 53.000 |
| PDL 3000 g/mol | 40 | PEG 2000 g/mol | 60 | 28.000 |
| PDL 3000 g/mol | 40 | PEG 4000 g/mol | 60 | 32.000 |
| PDL 3000 g/mol | 40 | PEG 6000 g/mol | 60 | 40.000 |
| PDL 3000 g/mol | 40 | PEG 8000 g/mol | 60 | 42.000 |
| PDL 3000 g/mol | 40 | PEG 10000 g/mol | 60 | 43.000 |
| PDL 3000 g/mol | 40 | PEG 20000 g/mol | 60 | 50.000 |

### Kombinationen mit PDL 2000 g/mol

| Material | % | | % | Mn |
|---|---|---|---|---|
| PDL 2000 g/mol | 30 | PCL 2000 g/mol | 70 | 75.000 |
| PDL 2000 g/mol | 40 | PCL 2000 g/mol | 60 | 95.000 |
| PDL 2000 g/mol | 50 | PCL 2000 g/mol | 50 | 65.000 |
| PDL 2000 g/mol | 60 | PCL 2000 g/mol | 40 | 73.000 |
| PDL 2000 g/mol | 70 | PCL 2000 g/mol | 30 | 46.000 |
| PDL 2000 g/mol | 30 | PCL 3000 g/mol | 70 | 99.000 |
| PDL 2000 g/mol | 40 | PCL 3000 g/mol | 60 | 72.000 |
| PDL 2000 g/mol | 50 | PCL 3000 g/mol | 50 | 78.000 |
| PDL 2000 g/mol | 60 | PCL 3000 g/mol | 40 | 73.000 |
| PDL 2000 g/mol | 70 | PCL 3000 g/mol | 30 | 65.000 |
| PDL 2000 g/mol | 30 | PCL 4000 g/mol | 70 | 49.000 |
| PDL 2000 g/mol | 40 | PCL 4000 g/mol | 60 | 62.000 |
| PDL 2000 g/mol | 50 | PCL 4000 g/mol | 50 | 85.000 |
| PDL 2000 g/mol | 60 | PCL 4000 g/mol | 40 | 83.000 |
| PDL 2000 g/mol | 70 | PCL 4000 g/mol | 30 | 56.000 |
| PDL 2000 g/mol | 30 | PCL 10000 g/mol | 70 | 85.000 |
| PDL 2000 g/mol | 40 | PCL 10000 g/mol | 60 | 109.000 |
| PDL 2000 g/mol | 50 | PCL 10000 g/mol | 50 | 130.000 |
| PDL 2000 g/mol | 60 | PCL 10000 g/mol | 40 | 121.000 |
| PDL 2000 g/mol | 70 | PCL 10000 g/mol | 30 | 91.000 |
| PDL 2000 g/mol | 30 | PCL-co-pTHF 2000g/mol | 70 | 60.000 |
| PDL 2000 g/mol | 40 | PCL-co-pTHF 2000g/mol | 60 | 78.000 |
| PDL 2000 g/mol | 50 | PCL-co-pTHF 2000g/mol | 50 | 89.000 |
| PDL 2000 g/mol | 60 | PCL-co-pTHF 2000g/mol | 40 | 59.000 |
| PDL 2000 g/mol | 70 | PCL-co-pTHF 2000g/mol | 30 | 55.000 |
| PDL 2000 g/mol | 40 | PPG 1200 g/mol | 60 | 65.000 |
| PDL 2000 g/mol | 40 | PPG 4000 g/mol | 60 | 53.000 |
| PDL 2000 g/mol | 40 | PEG 2000 g/mol | 60 | 28.000 |
| PDL 2000 g/mol | 40 | PEG 4000 g/mol | 60 | 32.000 |
| PDL 2000 g/mol | 40 | PEG 6000 g/mol | 60 | 40.000 |
| PDL 3000 g/mol | 40 | PEG 8000 g/mol | 60 | 42.000 |
| PDL 3000 g/mol | 40 | PEG 10000 g/mol | 60 | 43.000 |
| PDL 3000 g/mol | 40 | PEG 20000 g/mol | 60 | 50.000 |

### Mechanische Eigenschaften:

| Material | Temperatur | E-Modul | Reissdehnung |
|---|---|---|---|
| PDL-2k-co-PCL10k 40/60 | 20°C | 35 | 1350% |
| PDL-2k-co-PCL10k 40/60 | 70°C | 5 | 1000% |
| PDL-3k-co-PCL10k 40/60 | 20°C | 145 | 1500 % |

### PDL-Polyurethane mit glasigen Komponenten

Materialkompositionen Polyesterurethane mit PDL
PDL= Polypentadecadolacton, Polyester
PLGA= Poly-L-Lactid-co-glycolid (ran), Polyester
P-DL-LA = Poly-DL-Lactid, Polyester

| Material | % | | % | Mn |
|---|---|---|---|---|
| PDL 3000 g/mol | 50 | PLGA 7000 g/mol | 50 | 65.000 |
| PDL 3000 g/mol | 40 | PLGA 7000 g/mol | 60 | 55.000 |
| PDL 2000 g/mol | 50 | P-DL-LA 6000 g/mol | 50 | 87.000 |
| PDL 2000 g/mol | 40 | P-DL-LA 6000 g/mol | 60 | 72.000 |
| PDL 2000 g/mol | 50 | P-DL-LA 10000 g/mol | 50 | 63.000 |

### Mechanische Eigenschaften:

| Material | Temperatur | E-Modul Mpa | Reissdehnung |
|---|---|---|---|
| PDL-3k-co-P-DL-LA6k 50/50 | 20°C | 279 | 453 % |
| PDL-3k-co-P-DL-LA6k 50/50 | 50°C | 31 | 303 % |
| PDL-3k-co-P-DL-LA6k 50/50 | 55°C | 25 | 276 % |

### Shape Memory Eigenschaften:

| Material | Zyklus | Recovery % | Fixity % |
|---|---|---|---|
| PDL-3k-co-P-DL-LA6k 50/50 | 1 | 46,5 | 98,4 |
| PDL-3k-co-P-DL-LA6k 50/50 | 2 | 87,3 | 98,8 |
| PDL-3k-co-P-DL-LA6k 50/50 | 3 | 96,8 | 99,1 |
| PDL-3k-co-P-DL-LA6k 50/50 | 4 | 97,9 | 98,5 |
| PDL-3k-co-P-DL-LA6k 50/50 | 5 | 98,2 | 98,5 |

### Bends

Die folgenden Blends wurden hergestellt und getestet:

### Blends mit PDL

Es erfolgten Zumischungen von Zusatzstoffen zu einem PDL Polyesterurethan der Zusammensetzung PDL-3k-co-PCL-10k 40/60.
Es wurden folgende Komponenten in Anteilen von 0,5% - 25% zugesetzt:
■ Farbstoff (Masterbatch aus dem PDL-3k-co-PCL-10k 40/60 mit ca. 5 bis 10 Gew.-% Farbstoff)
■ Nano-Silber
■ Bariumsulfat

Für die Zumischung von 10% farbigen Masterbatch wurden folgende Shape Memory Eigenschaften festgestellt.

### Shape Memory Eigenschaften:

| Material | Zyklus | Recovery % | Fixity % |
|---|---|---|---|
| 90% PDL-3k-co-PCL-10k 40/60 | 1 | 30,5 | 98,3 |
| 10% Masterbatch blue | | | |
| 90% PDL-3k-co-PCL-10k 40/60 | 2 | 93,3 | 98,5 |
| 10% Masterbatch blue | | | |
| 90% PDL-3k-co-PCL-10k 40/60 | 3 | 96,5 | 99,5 |
| 10% Masterbatch blue | | | |
| 90% PDL-3k-co-PCL-10k 40/60 | 4 | 98,6 | 98,6 |
| 10% Masterbatch blue | | | |
| 90% PDL-3k-co-PCL-10k 40/60 | 5 | 99,2 | 98,9 |
| 10% Masterbatch blue | | | |

Auch die Mischungen mit kommerziellen Polymeren wie z.B. PE oder PVC zeigten bei Mischungsverhältnissen von 50% bis 90% PDL-Polyurethan gute Formgedächtniseigenschaften, die den oben angegebenen entsprechen.

### Shape Memory Blends

Hierbei handelt es sich um Mischungen aus reinen PDL-Polyurethanen mit PCL, bzw. PCL-Polyurethanen. Dabei erhält man erst durch sie Kombination beider Materialien einen Formgedächtniskunststoff.
Es wurden zum einen beide Komponenten (PDL-Polyurethan) und PCL bzw. PCL-Polyurethan gemeinsam in Lösung gebracht und anschließend ausgefällt. (Cofällung) Zudem wurden Mischungen in Schmelze mit Hilfe eines Compounders (Doppelschneckenextruder) hergestellt.

### Verwendete Mischungskomponenten:

A: PDL-3k-Polyurethan, Mn 95.000
B: PCL-10k-Polyurethan, Mn 102.000
C: PCL; Mn 80.000

Bei einem Anteil von 20% - 80 % an der PDL-Komponente zeigten die Materialien gute Formgedächtniseigenschaften. Insbesondere die Mischungsverhältnisse 40/60 ; 50/50; 60/40 entsprachen in ihrer Formgedächtnis-Funktionalität den Eigenschaften der PDLco-PCL-Polyurethane.

| Material | Zyklus | Recovery % | Fixity % |
|---|---|---|---|
| 40% PDL-3k-Polyurethan | 1 | 55,5 | 98,2 |
| 60% PCL-10k-Polyurethan | | | |
| 40% PDL-3k-Polyurethan | 2 | 97,3 | 98,2 |
| 60% PCL-10k-Polyurethan | | | |
| 40% PDL-3k-Polyurethan | 3 | 98,5 | 99,1 |
| 60% PCL-10k-Potyurethan | | | |
| 40% PDL-3k-Polyurethan | 4 | 98,6 | 98,6 |
| 60% PCL-10k-Polyurethan | | | |
| 40% PDL-3k-Polyurethan | 5 | 99,1 | 98,9 |
| 60% PCL-10k-Polyurethan | | | |

### PDL-Polyesterurethane: Bioverträglichkeit / Abbauverhalten

Untersuchungen zu den Abbaueigenschaften der resorbierbaren Materialien. Zu diesem Zweck wurden Abbaustudien bei Körpertemperatur (37°C) in wässrigen Pufferlösungen (Phosphatpufer, pH 7, enthaltend Na₂HPO₄, K₂HPO₄ und NaN₃) absolviert. Zur Abschätzung des Langzeitverhaltens wurden Untersuchungen zudem in sog. beschleunigte Abbaustudien bei 70°C durchgeführt. Zur Durchführung der Untersuchungen entnimmt man definierte Probekörper nach festgelegten Zeitpunkten und bestimmt deren Molekulargewicht (Mn) sowie den relativen Masseverlust in %.

In der folgenden Tabelle sind die Ergebnisse der Abbauversuche für das Material PDL-2k-co-PCL-10k aufgelistet.

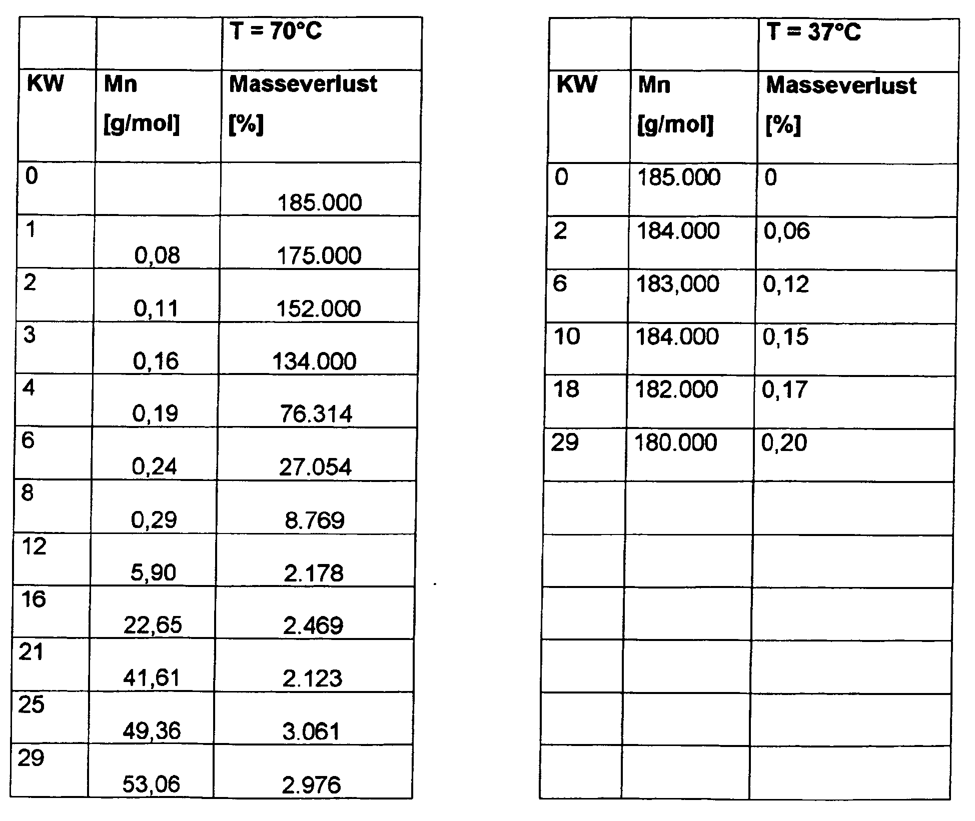

In der folgenden Tabelle sind die Ergebnisse der Abbauversuche für das Material PDL-3k-co-PCL-10k aufgelistet.

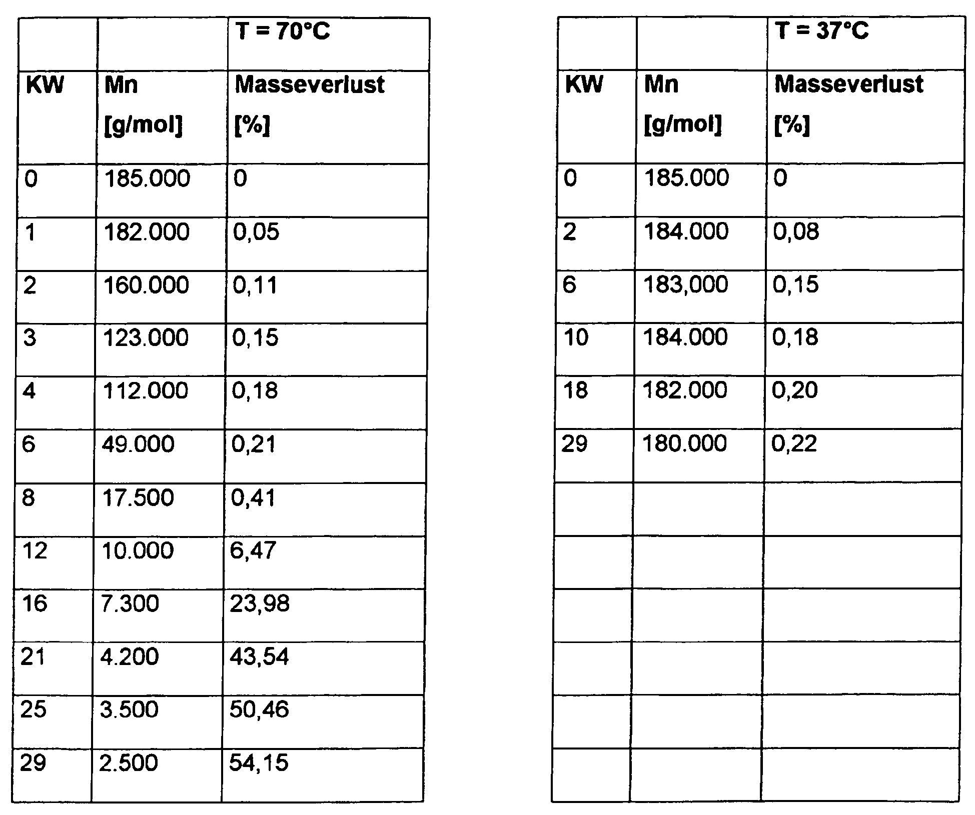

Weiterhin wurden die Probekörper mikroskopisch auf Veränderungen untersucht. Dabei konnte man vor allem deutliche Veränderungen der Oberflächenmorphologie beobachten.

### Bioverträglichkeitsprüfungen:

Für ausgewählte Materialien (PDL-3k-co-PCL-10k; PDL-2k-co-PCL-10k) wurden Untersuchungen zur biologischen Beurteilung von Medizinprodukten nach ISO/EN/DIN 10993-5 auf Zytotoxizität durchgeführt. Die Probekörper wurden zuvor mit Ethylenoxid (EO) sterilisiert.
Die Zytotoxizitätsuntersuchungen wurden im direkten Kontakt mit der murinen Fibroblastenzelllinie L929 (BioWithaker BE71-131F) durchgeführt. Die Kontrolle der Membranintegrität erfolgte PA 17 Vitalfärbung (vitale Zellen färben sich grün). Die Morphologie der Zellen nach 24stündiger Inkubationszeit wurde mit Hilfe der Pa 13 Hämalaunfärbung untersucht.

### Beurteilung:

Für beide Proben wird die Membranintegrität der L929-Zellen nicht durch die Materialien beeinflusst.

Die Morphologie der Zellen auf den Probekörpern ist im Vergleich zur Negativkontrolle nicht verändert. Das Zellbild der Kultur und die Aussaateffizienz auf dem Material entspricht der Negativkontrolle.

### Verarbeitung der PDL-Polvesterurethane

### Schaumextrusion:

Nachdem man das Polymer im ersten Arbeitsschritt extrudiert und granuliert, wird es im 2. Arbeitsgang in einem Doppelschneckenextruder mit einem Masterbatch (chemisches Treibmittel Hydrocerol CT 572, Produkt von Clariant) compoundiert, wobei ein Schaum erhalten wird (5% Treibmittel, 95% PPDL-3k-co-PCL10k). In der temporären Form (Strangform) wurde auf 25% des ursprünglichen Durchmessers komprimiert und anschließend bei Erwärmung wieder expandiert. Bei der Wiederherstellung der permanenten Form entwickelt das Material eine Kraft von 50 N.

### Schäume über TIPS

Als weitere Methode zur Herstellung poröser Strukturen wird die "thermisch induzierte Phasenseparation" (TIPS) eingesetzt. Hierzu wird eine Polymerlösung (Dioxan, 1 bis 25 Gew.-% Polymer) mit definierte Geschwindigkeit abgekühlt (von 60 bis insgesamt 3°C), wodurch zunächst eine flüssig-flüssig-Entmischung ausgelöst wird. Durch weiteres Abkühlen gelingt es schließlich die gebildete Phasenstruktur zu fixieren. Mit dem Material PDL-3k-co-PCL10k konnte so ein Schaum erzeugt werden. Das Lösungsmittel wurde im Hochvakuum entfernt.

### Herstellung von Mikroträgern (d 100 nm - 800 µm)

Herstellung von Mikrobeads aus PDL-3k-co-PCL10k. Mit Hilfe eines Emulgators (PVA) wurde zunächst eine Öl in Wasser Emulsion hergestellt. Durch schonende Evaporation des Lösungsmittels erhält man sphärische Mikroträger. Die Untersuchungen mittels Rasterelektronenmikroskopie zeigten eine breite Verteilung hinsichtlich der Partikelgröße sowie eine große Uneinheitlichkeit bzgl. der Partikelgestalt. Im Mittel liegt der Partikeldurchmesser zwischen 100 und 200 µm, wobei der überwiegende Teil der Mikroträger eine sphärische Gestalt aufweist. Die REM-Untersuchen verdeutlichen zudem, dass die meisten der Mikroträger Hohlkugeln sind, welche bei längerer Exposition mit dem Elektronenstrahl kollabieren. Die Untersuchung an einzelnen Mikroträgem zeigte zudem, dass diese eine glatte Oberfläche aufweisen mit einer leichten Strukturierung im Nanometerbereich.

Die vorliegende Erfindung stellt neuartige Polyesterurethane zur Verfügung, die eine gezielte Einstellung eines erwünschten Profils an Eigenschaften erlauben. Die einzusetzenden Ausgangsmaterialien sind übliche Grundstoffe, die ohne großen Aufwand kommerziell erhältlich sind. Die einzusetzenden Reaktionen zur Herstellung der Präpolymere (Makrodiole) sowie zur Herstellung der Polyesterurethane sind übliche Grundoperationen der Polymerchemie, so dass die erfindungsgemäßen Polyesterurethane leicht erhalten werden können. Die vorliegende Erfindung ermöglicht also, dass die oben beschriebenen Nachteile der bekannten Materialien überwunden werden können.

## Patentansprüche

1. Polyesterurethan, enthaltend Segmente aus Pentadecalactoneinheiten.

2. Polyesterurethan nach Anspruch 1, enthaltend mindestens ein weiteres Segment, umfassend Estereinheiten und/oder Ethereinheiten, verschieden von Pentadecalactoneinheiten.

3. Polyesterurethan nach Anspruch 2, wobei die weiteren Segmente teilkristalline Segmente, umfassend Poyestersegmente, Polyetherestersegmente und Polyethersegmente, wie Polycaprolactonsegmente (PCL), Polycaprolacton-copolytetrahydrofuransegmente PCL-co-pTHF), Tetrahydrofuransegmente (pTHF), Polypropylenglycolsegmente (PPG) und Polyethylenglycolsegmente (PEG), sowie glasartige Segmente, umfassend Polyester und Copolyester, wie Poly-L-lactid-co-glycolid (ran) (PLGA) und Poly-DL-Lactid (P-DL-LA) sind.

4. Polyesterurethan nach einem der vorstehenden Ansprüche, wobei die Segmente aus Pentadecalactoneinheiten ein Zahlenmittel des Molgewichts von 1000 bis 20000 g/mol aufweisen.

5. Polyesterurethan nach einem der vorstehenden Ansprüche 2 bis 4, wobei die weiteren Estereinheiten und/oder Ethereinheiten umfassenden Segmente ein Zahlenmittel des Molgewichts von 1000 bis 20000 g/mol aufweisen.

6. Polyesterurethan nach einem der vorstehenden Ansprüche, mit einem Zahlenmittel des Molgewichts im Bereich von 50000 bis 250000 g/mol.

7. Polyesterurethan nach einem der vorstehenden Ansprüche, erhalten durch Reaktion von Makrodiolen mit einem aliphatischen Diisocyanat.

8. Polyesterurethan nach einem der vorstehenden Ansprüche, enthaltend von 10 bis 80 Gew.-% Pentadecalactoneinheiten.

9. Polyesterurethan mit Form-Gedächtnis-Eigenschaften nach einem der vorstehenden Ansprüche 1 bis 8.

10. Polyesterurethan nach Anspruch 9, umfassend von 20 bis 80 Gew.-% Caprolactoneinheiten und von 80 bis 20 Gew.-% Pentadecalactoneinheiten, wobei die Polycaprolactonsegmente ein Zahlenmittel des Molgewichts von 3000 bis 11000 g/mol und die Polypentadecalactonsegmente ein Zahlenmittel des Molgewichts von 1000 bis 10000 g/mol aufweisen.

11. Mischung, umfassend mindestens ein Polyesterurethan nach einem der vorstehenden Ansprüche und mindestens einen weiteren Bestandteil, ausgewählt unter Polyethylen, Polypropylen, Polystyrol, PVC, Füllstoffen, Farbstoffen und medizinisch wirksamen Bestandteilen.

12. Verfahren zur Herstellung eines Schaums, umfassen mindestens ein Polyesterurethan nach einem der vorstehenden Ansprüche, umfassend die Stufen:
Compoundieren mindestens eines Polyesterurethans nach einem der vorstehenden Ansprüche mit einem Treibmittel und extrudieren der Mischung; oder
Lösen mindestens eines Polyesterurethans nach einem der vorstehenden Ansprüche in einem Lösungsmittel und unterwerfen der Lösung einer thermisch induzierten Phasenseparation zur Erzeugung poröser Strukturen.

## Claims

1. Polyester urethane, comprising segments of pentadecalactone units.

2. Polyester urethane according to claim 1, comprising at least one further segment comprising ester units and/or ether units, different from pentadecalactone units.

3. Polyester urethane according to claim 2, wherein the further segments are partially crystalline segments, comprising polyester segments, polyetherester segments and polyether segments, such as polycaprolactone segments (PCL), polycaprolactone-co-polytetrahydrofuran segments (PCL-co-pTHF), tetrahydrofuran segments (pTHF), polypropyleneglycol segments (PPG) and polyethyleneglycol segments (PEG), or glassy segments, comprising polyester and copolyester, such as poly-L-lactide-co-glycolide (ran) (PLGA) and poly-DL-lactide (P-DL-LA).

4. Polyester urethane according to any of the preceding claims, wherein the segments of the pentadecalactone units show a number average molecular weight of from 1000 to 20000 g/mol.

5. Polyester urethane according to any one of claims 2 to 4, wherein the further segments comprising ester units and/or ether units show a number average molecular weight of from 1000 to 20000 g/mol.

6. Polyester urethane according to any one of the preceding claims, having a number average molecular weight in the range of from 50000 to 250000 g/mol.

7. Polyester urethane according to any one of the preceding claims, obtained by reacting macrodiols with an aliphatic diisocyanate.

8. Polyester urethane in accordance with any one of the preceding claims, comprising 10 to 80 wt.-% pentadecalactone units.

9. Polyester urethane having shape memory properties in accordance with any one of claims 1 to 8.

10. Polyester urethane in accordance with claim 9, comprising 20 to 80 wt.-% caprolactone units and 80 to 20 wt.-% pentadecalactone units, wherein the polycaprolactone segments have a number average molecular weight of from 3000 to 11000 g/mol and wherein the polypentadecalactone segments have a number average molecular weight of from 1000 to 10000 g/mol.

11. Blend comprising at least one polyester urethane in accordance with any one of the preceding claims and comprising at least one further component selected among polyethylene, polypropylene, polystyrene, PVC, fillers, colorants and medicinally active components.

12. Process for preparing a foam comprising at least one polyester urethane according to any one of the preceding claims, comprising the steps:
Compounding at least one polyester urethane according to any one of the preceding claims with a foaming agent and extruding the blend; or
Dissolving at least one polyester urethane according to any one of the preceding claims in a solvent and subjecting the solution to a thermally induced phase separation in order to prepare porous structures.

## Revendications

1. Polyester-uréthanne, contenant des segments de motifs pentadécalactone.

2. Polyester-uréthanne selon la revendication 1, contenant au moins un autre segment, comprenant des motifs ester et/ou des motifs éther, différent des motifs pentadécalactone.

3. Polyester-uréthanne selon la revendication 2, dans lequel les autres segments sont des segments semi-cristallins, comprenant les segments de polyester, les segments de polyéther-ester et les segments de polyéther tels que les segments de polycaprolactone (PCL), les segments de copoly(polycaprolactone/polytétrahydrofuranne) (copoly(PCL/pTHF)), les segments de tétrahydrofuranne (pTHF), les segments de polypropylèneglycol (PPG) et les segments de polyéthylèneglycol (PEG), ainsi que les segments vitreux, comprenant les polyesters et les copolyesters tels que le co-poly(L-lactide/glycolide) (statistique) (PLGA) et le poly-DL-lactide (P-DL-LA).

4. Polyester-uréthanne selon l'une quelconque des revendications précédentes, dans lequel les segments de motifs pentadécalactone présentent une masse moléculaire moyenne en nombre de 1 000 à 20 000 g/mol.

5. Polyester-uréthanne selon l'une quelconque des revendications 2 à 4, dans lequel les autres segments comprenant des motifs ester et/ou des motifs éther présentent une masse moléculaire moyenne en nombre de 1 000 à 20 000 g/mol.

6. Polyester-uréthanne selon l'une quelconque des revendications précédentes, ayant une masse moléculaire moyenne en nombre dans la gamme de 50 000 à 250 000 g/mol.

7. Polyester-uréthanne selon l'une quelconque des revendications précédentes, obtenu par la réaction de macrodiols avec un diisocyanate aliphatique.

8. Polyester-uréthanne selon l'une quelconque des revendications précédentes, contenant 10% à 80% en poids de motifs pentadécalactone.

9. Polyester-uréthanne ayant des propriétés de mémoire de forme selon l'une quelconque des revendications 1 à 8.

10. Polyester-uréthanne selon la revendication 9, comprenant 20% à 80% en poids de motifs caprolactone et 80% à 20% en poids de motifs pentadécalactone, dans lequel les segments de polycaprotactone présentent une masse moléculaire moyenne en nombre de 3 000 à 11 000 g/mol et les segments de polypentadécalactone présentent une masse moléculaire moyenne en nombre de 1 000 à 10 000 g/mol.

11. Mélange, comprenant au moins un polyester-uréthanne selon l'une quelconque des revendications précédentes et au moins un autre composant choisi parmi le polyéthylène, le polypropylène, le polystyrène, le PVC, les charges, les colorants et les composants actifs sur le plan médical.

12. Procédé de production d'une mousse, comprenant au moins un polyester-uréthanne selon l'une quelconque des revendications précédentes, comprenant les étapes consistant à :
- mélanger au moins un polyester-uréthanne selon l'une quelconque des revendications précédentes avec un agent d'expansion et extruder le mélange ; ou
- dissoudre au moins un polyester-uréthanne selon l'une quelconque des revendications précédentes dans un solvant et soumettre la solution à une séparation de phase induite par la chaleur pour produire une structure poreuse.
